# EUROPEAN PATENT APPLICATION

(11) **EP 4 645 564 A1**
(43) Date of publication of application: **05.11.2025**
(21) Application number: 23911260.0
(22) Date of filing: 29.08.2023
(51) Int. Cl.: H01M 50/367, H01M 50/204, H01M 50/209, H01M 50/271, H01M 50/291, H01M 50/342, H01M 50/507

(54) **BATTERY PACK**

(30) Priority: 28.12.2022 JP 2022212655
(71) Applicant: Vehicle Energy Japan Inc., Ibaraki 312-8505 (JP)
(72) Inventor: TSUNAKI, Takuro, Hitachinaka-shi, Ibaraki 312-8505 (JP); KAMADA, Tatsuya, Hitachinaka-shi, Ibaraki 312-8505 (JP); YABUKI, Ryosuke, Hitachinaka-shi, Ibaraki 312-8505 (JP)
(74) Representative: MERH-IP Matias Erny Reichl Hoffmann Patentanwälte PartG mbB
(86) International application number: PCT/JP2023/031216
(87) International publication number: WO 2024/142476

(57) **Abstract**

A battery pack 11 is equipped with a battery cell group 800 in which a plurality of battery cells 701 are arranged, and the battery pack 11 includes: a duct 234 provided to extend along the battery cell group 800; and a bottom-surface part 35b of the duct 234 that faces the battery cell group 800 and is combined with the duct 234 to constitute a flow path 780 for guiding a gas discharged from at least one of the plurality of battery cells 800, wherein the duct is pressed against the battery cell group 800 via the bottom-surface part 35b.

## Description

### TECHNICAL FIELD

The present invention relates to a battery pack.

### BACKGROUND ART

When a secondary battery is used to supply electric power to, for example, an electrically driven vehicle, it is customary to stack a plurality of secondary batteries to form a battery pack. The battery pack is used by being incorporated into a battery pack set to be mounted in a vehicle. Regarding the above-mentioned battery pack, for example, there is known a battery pack described in PTL 1.

### CITATION LIST

### PATENT LITERATURE

PTL 1: Japanese Patent Application Laid-Open (Kokai) Publication No. 2017-4803

### SUMMARY OF THE INVENTION

### PROBLEMS TO BE SOLVED BY THE INVENTION

In the above-described battery pack, a battery cell(s) has a gas exhaust valve for discharging gas generated from inside the battery due to heat generation. The battery pack has a duct for guiding the gas discharged from the gas exhaust valve to, for example, outside a vehicle interior of an automobile. However, regarding the conventional battery pack, there is still room for improvement for airtightness of the duct. This tendency is even more noticeable if an attempt is made to increase a battery capacity according to performance improvement of, for example, electrically driven vehicles.

It is an object of the present invention to provide a battery pack capable of maintaining airtightness of a gas duct even when the gas is discharged from battery cells.

### MEANS TO SOLVE THE PROBLEMS

In order to achieve the above-described object, the present invention is a battery pack equipped with a battery cell group in which a plurality of battery cells are arranged, wherein the battery pack includes: a duct provided to extend along the battery cell group; and a bottom-surface part of the duct that faces the battery cell group and is combined with the duct to constitute a flow path for guiding a gas discharged from at least one of the plurality of battery cells, wherein the duct is pressed against the battery cell group via the bottom-surface part.

### ADVANTAGEOUS EFFECTS OF THE INVENTION

The battery pack capable of maintaining the airtightness of the gas duct even when the gas is discharged from the battery cells can be provided according to the present invention.

### BRIEF DESCRIPTION OF DRAWINGS

Fig. 1 is a perspective view of a battery pack set for receiving a battery pack;
Fig. 2 is an exploded perspective view of the battery pack set;
Fig. 3 is a perspective view of one embodiment of a battery cell which constitutes the battery pack;
Fig. 4 is an external appearance perspective view of one embodiment of the battery pack;
Fig. 5 is an exploded perspective view of the battery pack relating to Fig. 4;
Fig. 6 is a perspective view relating to an assembly structure of a gas duct, a first seal member, a bus bar (a bottom-surface part), a second seal member, and a battery cell group;
Fig. 7 is a perspective view of one embodiment of the bus bar (the bottom-surface part);
Fig. 8 is a perspective view of one embodiment of the gas duct;
Fig. 9 is a perspective view relating to a first principal part cross section of the battery pack; and
Fig. 10 is a perspective view relating to a second principal part cross section of the battery pack.

### DESCRIPTION OF EMBODIMENTS

Embodiments of the present invention will be described with reference to the drawings. In the drawings, there may sometimes be a case where the size or ratios of constituent members are exaggerated for the sake of easy understanding of the embodiments. The same reference numeral is assigned to the same configuration. A stacking direction X, a width direction Y, and a height direction Z of a battery pack are indicated with arrows. These directions indicate a relative positional relationship. Specifically speaking, these directions are changed, for example, when the battery pack is turned 180 degrees to locate the battery pack by overturning its upper surface and lower surface, or when the battery pack is turned 90 degrees to locate it by placing its upper surface as its side surface.

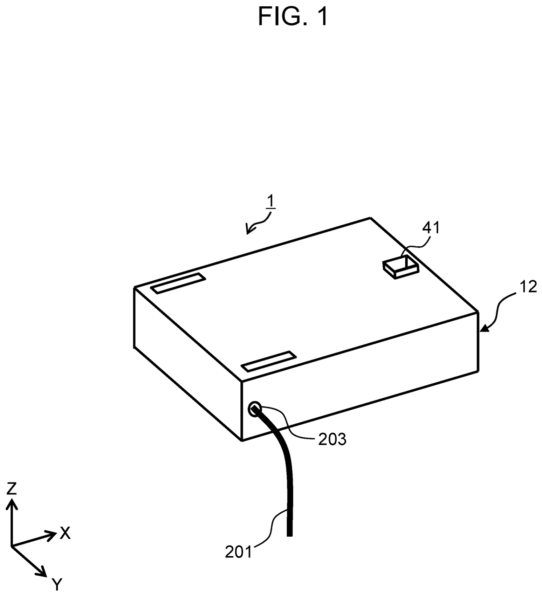

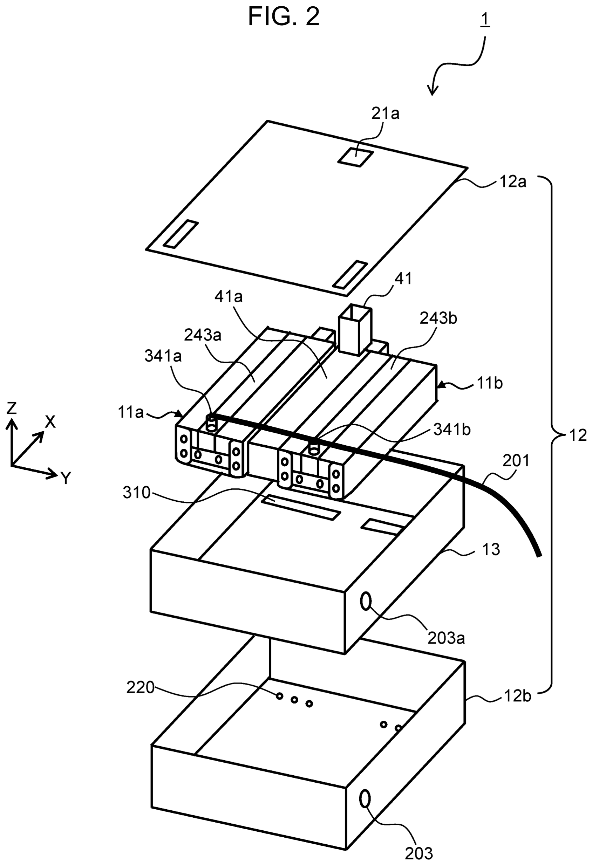

The battery pack is configured by securing a battery cell group, in which a plurality of battery cells are arranged, with a support made of, for example, metal. A battery cell is also expressed as a single battery. The battery cell is configured from a secondary battery. The battery pack is placed and secured in a housing to form a battery pack set. The battery pack set is mounted in, for example, a hybrid car driven by an internal combustion engine and a motor or an electric automobile driven by a motor, and is used as an electric power supply source for the motor. Fig. 1 is a perspective view of a battery pack set 1 including a battery pack. Fig. 2 is an exploded perspective view of the battery pack set 1.

The battery pack set 1 is configured by placing one or a plurality of battery packs 11 (11a, 11b) in a housing 12 which has a hollow box shape and is made of metal. Fig. 2 illustrates that two battery packs 11a, 11b are integrated together and are placed in the housing 12. The housing 12 includes a bottomed housing body 12b made of metal and a lid 12a which has a flat plate shape and is made of metal. An insertion hole 21a for a cooling duct 41 opens near one edge along the outer periphery of the lid 12a. This insertion hole 21a is for inserting the cooling duct 41 for discharging heat, which is installed at a securing member 41a for securing the battery packs 11a, 11b.

The lid 12a is provided with the insertion hole 21a for the cooling duct 41, so that when the lid 12a is closed in the state where the battery packs 11 (11a, 11b) are placed inside the housing body 12b, the lid 12a can close an open end of the housing body 12b without interfering with the cooling duct 41. Accordingly, the inside of the housing 12 can be hermetically sealed.

With the battery pack set 1, the housing 12 and the battery packs 11 can be secured to each other with various kinds of securing members which have electrical conductivity and are made of metal such as bolts and washers. At the bottom of the housing body 12b, holes 220 for inserting bolts (which are not illustrated in the drawing) are provided to assemble the battery packs 11a, 11b to the housing body 12b in the Z-direction.

The housing 12 includes an insulation case 13. The insulation case 13 is a container of a bottomed square tube shape which has insulation property and is made of resin. The insulation case 13 is inserted into the housing body 12b to be closely attached to inner surfaces of the housing body 12b. Accordingly, the most part of the inner bottom surface of the housing 12 is insulated. Rectangular openings 310 for inserting bolts to secure the battery packs 11 to the bottom surface of the housing body 12b are formed at the bottom surface of the insulation case 13.

A gas exhaust port (341a, 341b) is provided near one end of the gas exhaust duct (243a, 243b) for the battery pack (11a, 11b). Then, a gas exhaust tube 201 is connected to each gas exhaust port (341a, 341b). The gas exhaust port (341a, 341b) and the gas exhaust tube 201 are connected via, for example, a joint made of resin.

The gas exhaust tube 201, together with the gas exhaust duct (243a, 243b), serves a role to discharge the gas generated inside each secondary battery, which will be described later, to outside a vehicle interior. For that purpose, the gas exhaust tube 201 extends to the battery pack 11 side via insertion holes 203, 203a which are provided in the insulation case 13 and the housing body 12b in advance. The other end of the gas exhaust tube 201 opposite the battery packs 11 extends outside of the housing 12 and is connected to a gas exhaust hole (which is not illustrated in the drawing) which communicatively couples the inside and outside of the vehicle interior.

The gas generated from at least one of the plurality of battery cells which constitute the battery pack (11a, 11b) passes through the inside of the gas exhaust duct (243a, 243b), reaches the gas exhaust port (341a, 341b), further passes through the inside of the gas exhaust tube 201, and is then discharged to outside the vehicle interior.

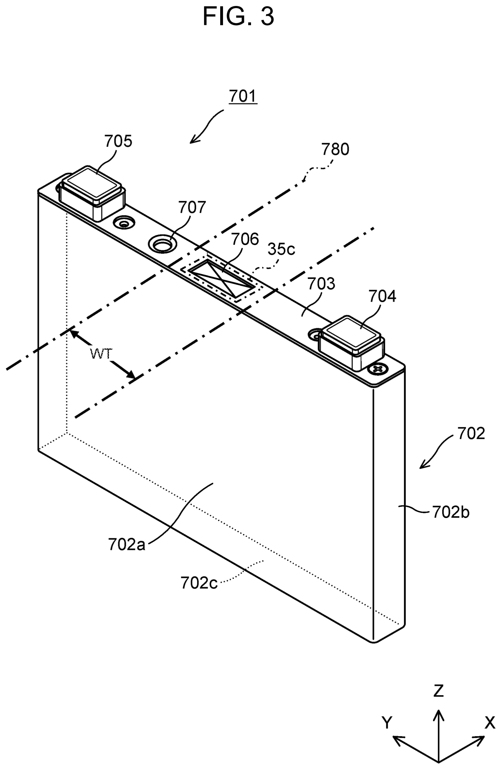

An embodiment of the battery pack 11 will be described below. An explanation will be firstly provided about battery cells 701, which constitute the battery pack 11, with reference to Fig. 3. A battery cell 701 has a battery can 702, a battery lid 703, a positive electrode terminal 704, a negative electrode terminal 705, a gas exhaust valve 706, a liquid injection plug 707, and an electrolytic solution, an electric charging/discharging element, and an insulation case which are not illustrated in the drawing. The gas exhaust valve 706 is provided at a Y-directional center of the battery lid 703. A secondary battery capable of electric charging/discharging such as a lithium-ion secondary battery is used as the battery cell 701.

The battery can 702 is of a parallelopiped shape, has an internal space with one open end, and is made of aluminum or an aluminum alloy. The battery can 702 has a pair of opposite side plates 702a whose area is large, a pair of opposite side plates 702a whose area is small, and a bottom plate 702c on the opposite side of the opening. The electric charging/discharging element in a state of being covered with the insulation case is placed in the internal space of the battery can 2, into which the electrolytic solution is injected. A positive electrode of the electric charging/discharging element is connected to the positive electrode terminal 704 and a negative electrode of the electric charging/discharging element is connected to the negative electrode terminal 705.

The battery lid 703 has the same rectangular flat plate shape as that of the bottom plate 702c, is made of aluminum or an aluminum alloy, and blocks the opening of the battery can 702. The battery lid 703 is joined to the opening of the battery can 702 by joining means such as laser welding. The battery lid 703 has a liquid injection hole which pierces through it and is not illustrated in the drawing, the electrolytic solution is injected through the liquid injection hole, and the liquid injection hole is blocked with a liquid injection plug 707.

A gas exhaust valve 706 is provided at a central part of the battery lid 703. When the gas is generated due to heat generation caused by an anomaly such as overcharging and the pressure inside the battery can 702 rises and reaches to a specified pressure, the gas exhaust valve 706 is released and discharges the gas from inside the container, thereby reducing the pressure inside the battery can 702.

Moreover, through holes which are not illustrated in the drawing are formed in one end and the other end of the battery lid 703 and the positive electrode terminal 704 and the negative electrode terminal 705 are installed. Portions of the positive electrode terminal 704 and the negative electrode terminal 705 which are exposed outwards from the battery lid 703 are respectively formed as cuboids, each of which has a flat top face. The electric power generated by the battery cell 701 is supplied via the positive electrode terminal 704 and the negative electrode terminal 705 to external equipment or the electric power generated externally is supplied via the positive electrode terminal 704 and the negative electrode terminal 705 and charged to the electric charging/discharging element.

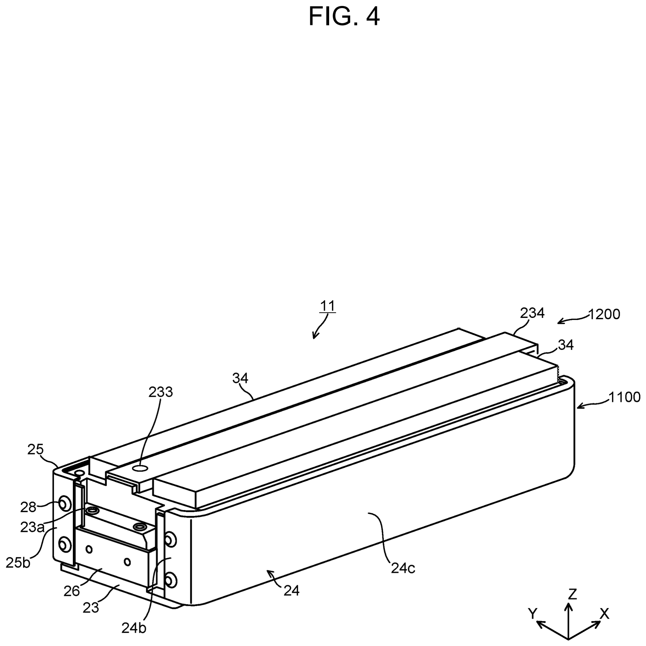

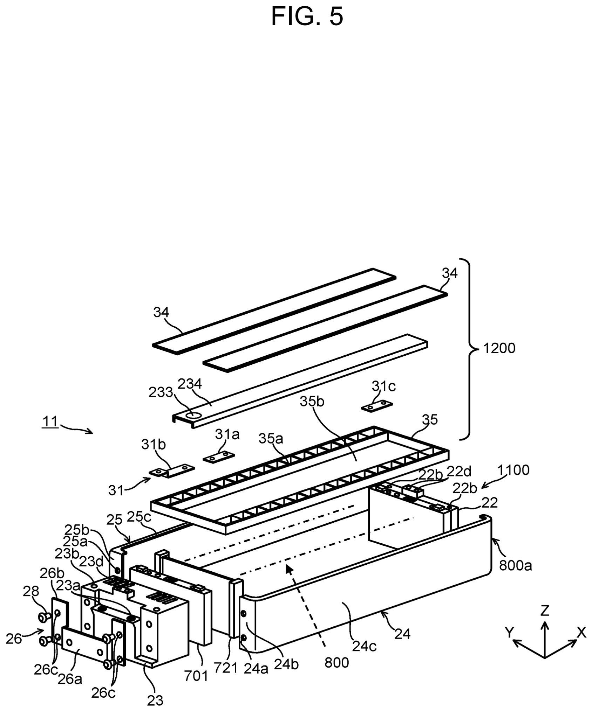

Next, the battery pack 11 will be described. Fig. 4 is an external appearance perspective view of the battery pack and Fig. 5 is an exploded perspective view of the battery pack. The battery pack 11 is configured from a block assembly 1100 and a bus bar case assembly 1200 as illustrated in Fig. 4. The block assembly 1100 is configured from an aggregate (battery cell group) 800 of a plurality of battery cells and a stiffening member 800a for the battery cell group. The battery cell group 800 forms an integrated structure reinforced by the stiffening member 800a. The battery cell group may be expressed as a stacked body or a stack.

The battery cell group 800 is formed by placing the plurality of battery cells 701 with their side plates 702a (Fig. 3) facing each other and with their bottom plates 702c located at the bottom, and by arranging the plurality of battery cells 701 in one direction (the stacking direction X) with a spacer(s) 721 held between the battery cells. A first end spacer 23 is installed at one end side of the battery cell group 800 and a second end spacer 22 is installed at the other end side of the battery cell group 800.

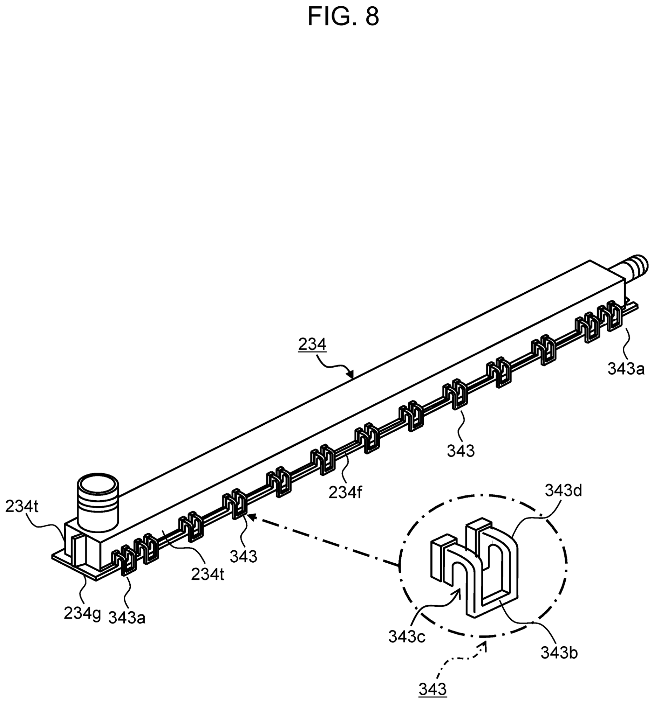

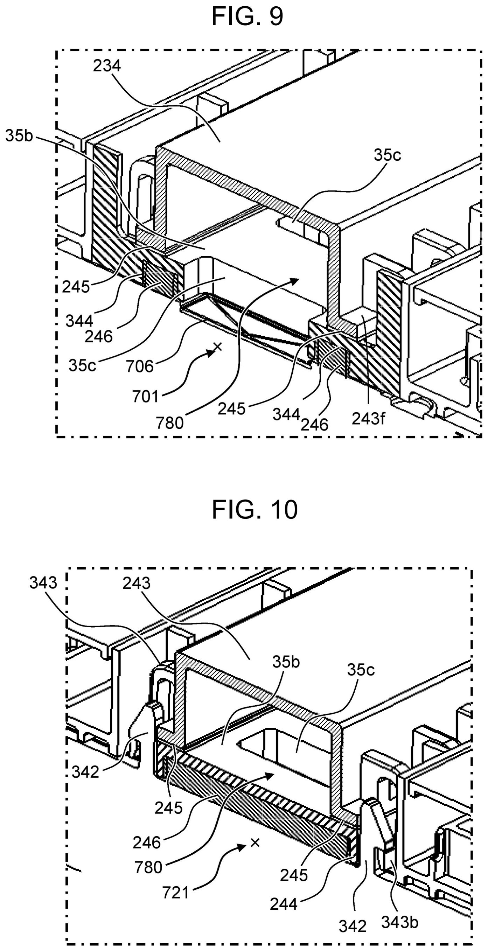

The spacer 721 is made of synthetic resin having insulation property. The spacer 721 has recesses, each of which corresponds to the shape of the battery cell 701, on their both sides and uses the recesses to retain the battery cells 701 and regulates the Y-direction and the Z-direction. Moreover, a claw part 324 (Fig. 10) is provided on the top of the spacer 721 in the Z-direction as described later so as to engage with a hook 343 (Fig. 8) provided at the gas exhaust duct 234.

The first end spacer 23 has insulation property, is made of synthetic resin which is a harder material than that of the spacer 721, and is located adjacent to a battery cell 701 positioned at one end relative to the stacking direction. The first end spacer 23 has a recess corresponding to the battery cell 701 on a surface facing the battery cell 701 and uses the recess to retain the battery cell 701 and regulate the Y-direction and the Z-direction. A fixing bolt hole 23a, a positive electrode connecting terminal 23b, and a mounting hole 23d for the gas exhaust duct are formed on the side facing an end plate 26 of the first end spacer 23.

The second end spacer 22 has insulation property, is made of synthetic resin which is a harder material than that of the spacer 721, and is located facing a battery cell 701 positioned at the other end relative to the stacking direction. The second end spacer 22 has a recess corresponding to the shape of the battery cell 701 on a surface facing the battery cell 701 and uses the recess to retain the battery cell 701 and regulate the Y-direction and the Z-direction. Moreover, a fixing bolt hole (which is not illustrated in the drawing) and a negative electrode connecting terminal 22b are provided on the side facing an end plate of the second end spacer 22. Furthermore, a fixing bolt hole(s) 22d for securing each constituent element is formed at the top of the second end spacer 22 in the Z-direction.

The stiffening member 800a has a pair of side rails 24, 25, a pair of end plates 26 (the end plate on the second end spacer 22 side is not illustrated in the drawing), and a plurality of bolts 28. The side rail 24 is formed from metal materials and has a rail body 24c extending in the X-direction and bent parts 24b which are bent in the Y-direction of the rail body 24c and face opposite each other, and securing holes 24a which pierce through the bent part 24b in the X-direction are provided in each bent part 24b. The bent parts 24b are located opposite the second end spacer 22 and the first end spacer 23 from outside relative to the stacking direction and covers a part of the second end spacer 22 and a part of the first end spacer 23.

The side rail 24 retains and firmly binds the second end spacer 22, the plurality of battery cells 701, the plurality of spacers 721, and the first end spacer 23 in a state of being pressed in the stacking direction. The side rail 24 is secured to the end plates 26 (the end plate on the second end spacer 22 side is not illustrated in the drawing) by inserting the bolts 28 into the securing holes 24a in the bent parts 24b.

The side rail 25 is formed from a metal material similar to that of the side rail 24 and has a similar function to that of the side rail 24. The side rail 25 is placed opposite the side rail 24 in the Y-direction so that the tacked battery cells 701 are held between the side rails 24, 25; and the side rail 25 has a rail body 25c extending in the X-direction and bent parts 25b which are bent in the Y-direction at both ends of the rail body 25c and placed opposite each other. The bent parts 25b have securing holes 25a through which the bolts 28 are to be inserted.

The end plate 26 is formed from a plate-shaped metal material, that is, a sheet metal and is located adjacent to the first end spacer 23. The end plate 26 has a flat part 26a in which a through hole for positioning relative the first end spacer 23 is formed, and securing parts 26b for securing the side rail 24 and the side rail 25. The securing part 26b has securing holes 26c through which the bolts 28 are to be inserted. The securing part 26b has a step which is recessed in the stacking direction relative to the flat part 26a and is configured so that a head of each bolt would not protrude from the surface of the flat part 26a when the respective bent parts 24b, 25b of the side rail 24 and the side rail 25 are fastened with the bolts 28. A nut is attached to the securing part 26b. The second end spacer 22 side is configured in a similar manner.

The end plate on the second end spacer 22 side is formed in a manner similar to that of the end plate 26 and is located adjacent to the second end spacer 22. This end plate and the respective bent parts 24b, 25b of the side rail 24 and the side rail 25 are fastened with the bolts 28.

The bus bar case assembly 1200 is configured by including a bus bar 31, a harness, a gas exhaust duct 234, a plurality of covers 34, and a bus bar case 35. The bus bar case assembly 1200 has functions, for example, establishing electrical connections between the terminals of the battery cells 701 and a controller, monitoring voltages and temperatures, and discharging the gas.

The bus bar 31 includes an inter-cell bus bar 31a, a negative electrode bus bar 31b, or a positive electrode bus bar 31c and is placed in the bus bar case 35. The inter-cell bus bar 31a electrically connects the positive electrode terminals 704 and the negative electrode terminals 705 of the battery cells 701. The negative electrode bus bar 31b is connected to the first end spacer 23 and the positive electrode bus bar 31c is connected to the second end spacer 22.

The bus bar case 35 is configured from resin having insulation property. The bus bar case 35 has an array of a plurality of frames 35a along each of both width-directional sides of the battery cells 701 along their stacking direction and the inter-cell bus bar 31a, the negative electrode bus bar 31b, and the positive electrode bus bar 31c are respectively received in the frames. A base plate part 35b to be mounted on the battery cell group 800 is formed on a surface of the bus bar case 35 on the battery cell group 800 side.

The gas exhaust duct 234 which is a duct stated in the claims is made of resin and is provided to extend its length over the battery cell group in the X-direction while facing the battery cell group 800. The gas exhaust duct 234 is secured, with screws located at its both ends in the X-direction, to female screws of the second end spacer 22 and the first end spacer 23. The plurality of covers 34 have a function insulating and protecting constituent elements of the bus bar case assembly 1200 and are located to cover the bus bar 31 and the harness. Each cover 34 is fitted into, and is secured to, the bus bar case 35.

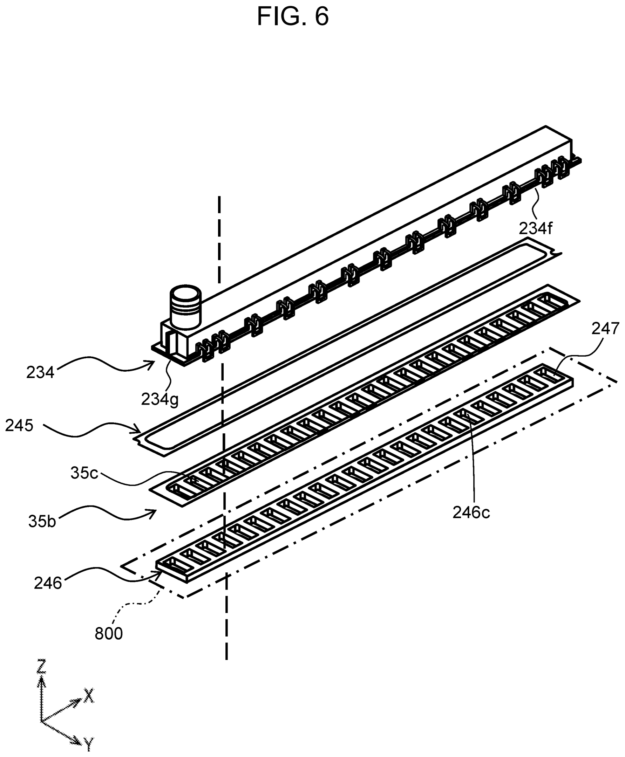

The gas exhaust duct 234 is provided to extend in the X-direction, is opened on its battery cell group 800 side along the X-direction, and has a tunnel-like form. Referring to Fig. 6, the gas exhaust duct 234 and the base plate part 35b are combined so as to cover the open part of the gas exhaust duct 234 with the bus bar case 35 (the base plate part 35b) over the flat surface of the battery cell group 800. Specifically speaking, flange parts (234f, 234g) along the periphery of the gas exhaust duct 234 are supported by the periphery of the base plate part 35b; and as a result, a tunnel-like isolated space which is oriented in the X-direction is formed. This is a gas flow path 780 (Fig. 9 and Fig. 10). The base plate part 35b which is a surface facing the battery cell group 800 is an example of a bottom-surface part stated in the claims.

The gas exhaust duct 234 isolates and collects the gas, which has been discharged from the gas exhaust valve 706 of at least one battery cell 701 of the battery cell group 800, at the center in the width direction (the Y-direction), guides the gas in the X-direction within the gas flow path 780, and discharges it from the gas exhaust port 233.

The base plate part 35b supports, as the bottom-surface part of the gas exhaust duct 234, the gas exhaust duct 234 along the X-direction relative to the battery cell group 800. The gas flow path 780 is provided along the X-direction with WT which is the width capable of covering the gas exhaust valve 706 in the Y-direction as illustrated in Fig. 3. The gas exhaust valves 706 of the respective battery cells 701 of the battery cell group 800 lead to the gas exhaust flow path 780.

The gas exhaust duct 234 is pressed against and connected to the battery cell group 800 via the base plate part 35b along the X-direction in order to enhance airtightness of the gas flow path 780. As a result, a first seal member 245 (Fig. 6) located at a joint part (joint face) between the gas exhaust duct 234 and the base plate part 35b is compressed to enhance sealability, thereby suppressing leakage of the gas from the gas exhaust flow path 780. Then, a second seal member 246 (Fig. 6) between the base plate part 35b and the battery cell group 800 is firmly compressed, thereby preventing the gas discharged from the gas exhaust valve(s) 706 from flowing around and into places other than the gas exhaust flow path 780.

As the gas exhaust duct 234 and the base plate part 35b are pressed against the battery cell group 800, rigidity of the gas flow path 780 enhances. Even if the battery pack 11 suffers physical stresses such as vibrations and shaking during traveling of a vehicle, it is possible to prevent any shape changes such as misalignment or rattling of the gas exhaust flow path 780 and enhance the sealability against leakage of the gas in combination with the seal members. One form of pressing is to cause the gas exhaust duct 234 to engage with the battery cell group 800 via the base plate part 35b. One form of the structure for engagement is described below.

Each of the spacers 721 and the end spacers 22, 23 includes a pair of claw parts (hook parts) 342 as engaging parts (Fig. 10). The gas exhaust duct 234 includes hook 343, 343a as engaged parts on its side surface 234t in the X-direction as illustrated in Fig. 8. The plurality of hooks 343 are located on the side surface 234t of the gas exhaust duct 234 opposite the respective claw parts 342 of the plurality of spacers 721, 22, 23 and at a constant pitch in the X-direction. The hooks 343a at both X-directional ends of the side surface 234t are for the respective end spacers 22, 23.

When the gas exhaust duct 234 is pressed against the battery cell group 800, a pair of claw parts 342 of each spacer 721, 22, 23 engage with the hooks 343, 343a of the gas exhaust duct 234. As a result, the gas exhaust duct 234 is supported by the base plate part 35b and is firmly pressed against, enters into contact with, and is secured to the battery cell group 800 via the base plate part 35b along the X-direction.

The claw parts 342 protrude perpendicularly from the Z-directional end face of the spacer 721, 22, 23 as illustrated in Fig. 10. There are a pair of claw parts 342 symmetrically at the Y-directional center of the relevant spacer. The claw parts 342 may be provided at all the spacers 721 and/or the end spacers 22, 23. With the gas exhaust duct 234, a plurality of hooks 343 exist corresponding to the number and positions of the claw parts of the spacers. Referring to Fig. 8, each of the plurality of hooks 343 bends from a Z-directional lower end of the gas exhaust duct 234 and protrudes towards the battery cell group 800 side. The hook 343 is composed of an arm 343d of a substantially U-shape. The claw part 342 fits into a recess 343c inside the arm and engages with a lower end 343b of the arm as illustrated in Figs. 8 and 10.

Since a plurality of securing means composed of the claw parts 342 (engaging elements) and the hooks 343 (engaged elements) equally exist along the X-direction on both Y-directional sides of the battery cell group 800, the gas exhaust duct 234 and the base plate part 35b are pressed against, and enter into contact with, the battery cell group 800 and it thereby becomes possible to construct the gas exhaust flow path 780 with high rigidity in the X-direction. Incidentally, the claw parts are defined as the engaging elements and the hooks are defined as the engaged elements, but they may be called reversely.

The spacers equipped with the claw parts 342 may be some spacers among all the spacers. If the claw parts are provided on some spacers, the spacers which should be equipped with the claw parts are selected so that the positions and number of the claw parts become symmetrical on both the Y-directional sides in the X-direction of the battery cell group 800. As the end spacers 22, 23 are equipped with the claw parts 342, the gas flow path 780 can be made resistant to a high pressure caused by a turbulence at both ends in the X-direction.

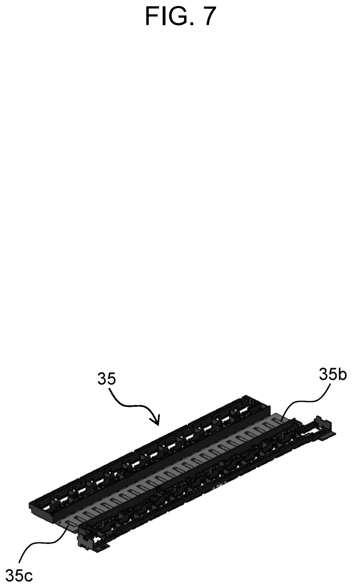

The base plate part 35b is provided with a plurality of openings 35c facing the respective gas exhaust valves 706 of the plurality of battery cells 701 so as not to interfere with the gas exhaust valves 706 (Figs. 6, 7, 9, and 10). The opening 35c is formed to be one size larger than the area of the gas exhaust valve 706 so as not to hinder the outflow of the gas from the gas exhaust valve 706 to the gas flow path 780 (Figs. 3 and 9).

The gas exhaust duct 234 includes: a flange 243f which is bent perpendicularly in the X-direction along the periphery of both Y-directional end sides of the base plate part 35b side; and a flange 243g which is bent perpendicularly in the Y-direction along the periphery on both X-directional end sides of the base plate part 35b side of the gas exhaust duct 234 (Figs. 6, 8, and 10). The first seal member 245 is compressed by, held between, and secured to a joint face between these flanges 234f, 234g and the base plate part 35b (Figs. 6 and 10). The first seal member 254 is made to extend in the X-direction along the gas exhaust duct 234. Therefore, the gas is prevented from leaking from the joint face along the entire periphery of the gas flow path 780 to outside the gas flow path 780.

Referring to Fig. 9, the base plate part 35b has a recess 344, into which the second seal member 246 (Fig. 6) is fitted, on the battery cell group 800 (the battery cell 701) side. When the base plate part 35b is pressed against the battery cell group 800, the second seal member 246 is compressed within the recess 344 and is held and secured between the base plate part 35b and the battery cell group 800. Therefore, the second seal member 246 around the gas exhaust valve 706 seals the gas exhaust valve 706 except the gas flow path 780.

As the second seal member 246 is interposed between the base plate part 35b and the battery cell group 800, it has an opening 246c (Fig. 6) so as not to interfere with the gas exhaust valve 706, just like the opening 35c of the base plate part 35b. In order to make the two openings 35c and 246c align each other, the second seal member 246 is designed to be fitted into the recess 344 on the battery cell group 800 side of the base plate part 35b. The first seal member 245 and the second seal member cause the gas discharged from the gas exhaust valve 706 to be guided along the gas flow path 780 without leaking from the gas flow path 780.

The above-described seal members 245, 246 may be, for example, an elastic body made of compressible resin such as urethane, polypropylene, EPDM, or rubber. The seal member is adhesively attached and secured to an opposite face with, for example, a double-sided tape or an adhesive. The seal member is compressed against, and secured to, the opposite face, thereby making it possible to enhance the rigidity of the sealing part. As a result of the rigidity enhancement of the gas flow path as caused by the rigidity of the sealing part and the aforementioned engagement between the claw parts 342 and the hooks 343, the occurrence of misalignment or rattling of the gas flow path is prevented and the sealability is maintained even if some stress caused by, for example, motions of the vehicle is applied to the battery pack.

Referring to Fig. 10, in the width direction (the Y-direction) of the gas exhaust duct 234, the position where the first seal member 245 is held between the gas exhaust duct 234 and the base plate part 35b is closer to the width-directional (Y-directional) center of the battery cell(s) 701 than from the position where the claw parts 342 engage with the lower ends 343b (Fig. 8) of the hooks 343. Furthermore, in the height direction (the Z-direction) of the gas exhaust duct 234, the position where the claw parts 342 engage with the lower ends 343b (Fig. 8) of the hooks 343 is closer to the battery cell(s) 701 than from the position where the first seal member 245 is held between the gas exhaust duct 234 and the base plate part 35b. As a result, even when it is necessary to cause the plurality of claw parts 342 to engage with the hooks 343 respectively so as to make the claw parts 342 fitted into the hooks 343 after positioning the first seal member 245, the battery pack 11 can perform the respective engagements precisely without any misalignment.

Urethane foam (PORON (trademark)) having a fine and uniform cell structure is preferred as the first seal member 245 and the second seal member 246. This urethane foam has very small compressive residual strain, excellent sealability, and excellent energy absorbability. Even if stress is applied to the sealing part, the rigidity of the sealing part is high and, therefore, there is no fear that its sealability power may be impaired.

According to the previously mentioned embodiment, the following battery packs are provided. The first battery pack 11 is equipped with the battery cell group 800 in which the plurality of battery cells 701 are arranged, and the first battery pack 11 includes: the duct 234 provided to extend along the battery cell group 800; and the bottom-surface part 35b of the duct 234 that faces the battery cell group 800 and is combined with the duct 234 to constitute the flow path 780 for guiding the gas discharged from at least one of the plurality of battery cells 800, wherein the duct 234 is pressed against the battery cell group 800 via the bottom-surface part 35b.

If the first battery pack is employed, the first seal member 245 can be provided at the joint face between the duct 234 and the bottom-surface part 35b and the bottom-surface part 35b can be located at the battery cell group 800 via the second seal member 246. Therefore, the rigidity of a sealing face related to the flow path 780 for guiding the gas is enhanced along the battery cell group 800 and the sealability of the flow path 780 is enhanced also by the second seal member 246 in addition to the first seal member 245, so that it is possible to provide the battery pack which would cause no fear of leakage of the gas discharged from the battery cells.

A second battery pack is characterized in that in the first battery pack, the bottom-surface part 35b is a surface facing the battery cell group 800 of the bus bar case 35. If the second battery pack is employed, it is possible to provide the battery pack which would cause no fear of leakage of the gas discharged from the battery cells by using the bus bar case 35.

A third battery pack is characterized in that in the first battery pack, the duct 234 is engaged via the bottom-surface part 35b towards the battery cell group 800. If the third battery pack is employed, the duct 234 is engaged towards the battery cell group 800 while being supported by the bottom-surface part 35b. So, it is possible to further enhance the rigidity of the sealing part of the flow path 780.

A fourth battery pack is characterized in that in the third battery pack, the plurality of battery cells 701 of the battery cell group 800 are respectively stacked via the spacers 721; and the spacer 721 includes the engaging part 342 protruding towards the duct 234 and the engaging part 342 engages with the duct 234. If the fourth battery pack is employed, the duct 234 is firmly pressed against the battery cell group 800.

A fifth battery pack is characterized in that in the fourth battery pack, all the spacers 721 placed between the plurality of battery cells of the battery cell group 800 are provided with the engaging part 342. If the fifth battery pack is employed, the rigidity and sealability of the flow path 780 are enhanced along the entire length of the flow path 780.

A sixth battery pack is characterized in that in the fourth battery pack, the battery cell group 800 includes the end spacers 22, 23 at its ends relative to the stacking direction of the plurality of battery cells 701 and the end spacer has the engaging part. If the sixth battery pack is employed, it is possible to enhance the sealability against a turbulence of the gas which can be generated at the lengthwise-directional ends of the flow path 780.

A seventh battery pack is characterized in that in the first battery pack, the duct 234 and the bottom-surface part 35b form joint faces at their respective peripheries and the first seal member 245 is compressed by, and held between, the duct 234 and the bottom-surface part 35b. If the seventh battery pack is employed, the sealability can be enhanced along the entire periphery of the flow path 780.

An eighth battery pack is characterized in that in the first battery pack, each of the plurality of battery cells 701 of the battery cell group 800 includes the gas exhaust valve 706, and the bottom-surface part 35b and the second seal member 246 have the openings 35c, 246c (Fig. 6), respectively, which do not hinder the outflow of the gas from the gas exhaust valve 706; and a part of the second seal member 246, excluding its opening, is compressed by, and held between, the base plate part 35b and the battery cells 701. If the eighth battery pack is employed, the sealability of the flow path 780 can be enhanced without hindering the outflow of the gas from the opening into the flow path 780. The opening 35c, 246c has the size equal to or larger than the area of the gas exhaust valve 706; or if the opening is to be narrowed because of reasons such as enhancement of the rigidity of the structure, the opening 35c, 246c has the size of at least 80% of that of the gas exhaust valve 706.

A ninth battery pack is characterized in that in the fourth invention, in the width direction of the duct 234, the position where the first seal member 245 is held between the duct 234 and the bottom-surface part 35b is closer to the center of the battery cell 701 than from the position where the engaging part 342 engages with the duct 234; and a tenth battery pack is characterized in that in the fourth invention, in the height direction of the duct 234, the position where the engaging part 342 engages with the duct 234 is closer to the battery cells 701 than from the position where the first seal member 245 is held between the duct 234 and the bottom-surface part 35b.

Therefore, even when it is necessary to cause the plurality of claw parts 342 to engage with the hooks 343, respectively, in order to make the claws 342 fitted into the hooks 343 after positioning the first seal member 245, the battery pack 11 can perform the respective engagements precisely without misalignment.

The embodiments of the present invention have been described above in detail; however, the present invention is not limited to the above-described embodiments and various design changes can be made within the scope not departing from the technical idea of the present invention as stated in the scope of patent claims. For example, the aforementioned embodiments are the detailed explanation of the present invention in order to make it easily understandable and are not necessarily limited to an embodiment having all the explained configurations. Moreover, a part of the configuration of a certain embodiment can be replaced with the configuration of another embodiment and the configuration of another embodiment can be also added to the configuration of a certain embodiment. Furthermore, another configuration can be added to, deleted from, or replaced with a part of the configuration of each embodiment.

### REFERENCE SIGNS LIST

- 11:: battery pack
- 35b:: bottom-surface part
- 234:: duct
- 245:: first seal member
- 246:: second seal member
- 701:: battery cell
- 780:: flow path
- 800:: battery cell group

## Claims

1. A battery pack equipped with a battery cell group in which a plurality of battery cells are arranged,
the battery pack comprising:
a duct provided to extend along the battery cell group; and
a bottom-surface part of the duct that faces the battery cell group and is combined with the duct to constitute a flow path for guiding a gas discharged from at least one of the plurality of battery cells,
wherein the duct is pressed against the battery cell group via the bottom-surface part.

2. The battery pack according to claim 1,
wherein a first seal member is provided at a joint face between the duct and the bottom-surface part; and
wherein the bottom-surface part is located at the battery cell group via a second seal member.

3. The battery pack according to claim 1,
wherein the bottom-surface part is a surface of a bus bar that faces the battery cell group.

4. The battery pack according to claim 1,
wherein the duct is engaged via the bottom-surface part towards the battery cell group.

5. The battery pack according to claim 4,
wherein the plurality of battery cells of the battery cell group are respectively stacked via spacers;
wherein each of the spacers includes an engaging part which protrudes towards the duct; and
wherein the engaging part engages with the duct.

6. The battery pack according to claim 5,
wherein each of all the spacers located between the plurality of battery cells of the battery cell group is provided with the engaging part.

7. The battery pack according to claim 5,
wherein the battery cell group includes an end spacer at its end in a direction where the plurality of battery cells are stacked; and the end spacer has the engaging part.

8. The battery pack according to claim 1,
wherein the duct and the bottom-surface part form the joint face at their respective peripheries; and
wherein the first seal member is compressed by, and held between, the duct and the bottom-surface part.

9. The battery pack according to claim 1,
wherein each of the plurality of battery cells of the battery cell group includes a gas exhaust valve;
wherein each of the bottom-surface part and the second seal member includes an opening which does not hinder outflow of the gas from the gas exhaust valve; and
wherein a part of the second seal member, excluding the opening, is compressed by, and held between, the bottom-surface part and the battery cell.

10. The battery pack according to claim 5,
wherein in a width direction of the duct, a position where the first seal member is held between the duct and the bottom-surface part is closer to a center of each of the battery cells than from a position where the engaging part engages with the duct.

11. The battery pack according to claim 5,
wherein in a height direction of the duct, a position where the engaging part engages with the duct is closer to the battery cells than from a position where the first seal member is held between the duct and the bottom-surface part.
